(19) Europäisches Patentamt
European Patent Office
Office européen des brevets

(11) **EP 4 283 532 A1**

(12) **EUROPEAN PATENT APPLICATION**

(43) Date of publication:
**29.11.2023 Bulletin 2023/48**

(51) International Patent Classification (IPC):
***G06N 3/123*** *(2023.01)*

(21) Application number: **22020196.6**

(52) Cooperative Patent Classification (CPC):
**G06N 3/123**

(22) Date of filing: **25.05.2022**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Bauer, Volker**
**4020 Linz (AT)**

(72) Inventor: **Bauer, Volker**
**4020 Linz (AT)**

Remarks:
Claims filed after the date of filing of the application (Rule 68(4) EPC).

(54) **MATHEMATICS AND GENETIC BIOLOGY**

(57) The following summary shows aspects of Mathematics that are crucial for the understanding of genetic Biology. This will be pointed out in the following abstract and the following claim will show what is claimed for patent. Both will be sent after an Anmeldenummer is returned. The subject is obviously important for any Biology that deals with the origin of life in a cell up to human conception.

This proof, the abstract and the claim are both for publication and patent.

In the following GCH is for General Continuum Hypothesis in Set Theory, that states that any step of infinity measured in Aleph $\aleph_\lambda$ is the same as the power set Bet $\beth_\lambda$ of the Aleph before. For limit cardinals the unification must have the same result. So the naturals $\mathbb{N}$ are $\omega$, the least inductive set (infinity) as $\aleph_0$. $2^\omega$ is Beth1 ($\beth_1$). According to the famous proof of Cohen it is possible and consistent in Set Theory that Aleph1 $\aleph_1$ lies inbetween:

$\omega < \aleph_1 < \beth_1$ . But GCH as a sumption is to rule out this possibility in an axiom in addition.

Let 3SAT be a formula of the following kind: $P_1 \ldots P_n$ propositions, $H_1 \ldots H_n$ helper propositions ($\neg H_n$ or $P_1$ or $H_1$ ) and ( $\neg H_1$ or $P_2$ or $H_2$ ) and ..... ( $\neg H_m$ or Pm+i or $H_{m+1}$ ) and ..... ( $\neg H_{n-1}$ or $P_n$ or $H_n$) 3SAT is for 3 and satisfiable.

P with no index is the class of computations that can be computed in polynomial functional steps of a single step. This is for any computation as Turing Machines, Register Machines and other with equivalence in power.

Step s so $1 + s + s^2 + s^3 \ldots s^l$

NP is the class of computations that check in polynomial time if a certificate is a solution. Exponential time is ruled out for P and NP ( $b^s$).

DNA is short for deoxyribonucleic acid, the genetic information. The important 4 bases are Adenine, Guanine, Cytosine and Thymine.

Conjecture P not equal NP if GCH end conjecture
Proof: 3SAT
With DNA with the 4 different Adenine, Guanine, Cytosine and Thymine.
antichain □

The proof shows that for a cell/monad computing DNA there must be a certain $n \in \mathbb{N}$ (of 3SAT) , n < 32000 to make sense, from where on information on infinities is crucial what is going on in heredity. This fact can not be denied or neglected in genetic research so that any kind of genetic engineering must know it's limits. The forthcoming abstract and claim will show. So P not equal NP is no more a problem of theoretical Informatics. The condition of the cell/monad is now crucial whether a computation can be carried out in time or not, in the not case the soon death after fertilization is the result. Artificial insemination has to be judged after a fair consideration, anal coitus conception as a result of speculation on partnership can not at all be seen as an alternative way although it happens in everyday life without science ( sperm out of cleaning chemistry with shit ).

**Description**

The following description shows aspects of Mathematics that are crucial for the understanding of genetic Biology. The subject is obviously important for any Biology that deals with the origin of life in a cell up to human conception.

This description, the survey and the claim are both for publication and patent.

In the following GCH is for General Continuum Hypothesis in Set Theory, that states that any step of infinity measured in Aleph $\aleph_\lambda$ is the same as the power set Bet $\beth_\lambda$ of the Aleph before. For limit cardinals the unification must have the same result. So the naturals $\mathbb{N}$ are $\omega$, the least inductive set (infinity) as $\aleph_0$ . $2^\omega$ is Beth1 ($\beth_1$). According to the famous proof of Cohen it is possible and consistent in Set Theory that Aleph1 $\aleph_1$ lies inbetween: $\omega < \aleph_1 < \beth_1$. But GCH as a sumption is to rule out this possibility in an axiom in addition.

Let 3SAT be a formula of the following kind: Pi ... Pn propositions, $H_1$ ... Hn helper propositions ( ¬$H_n$ or Pi or $H_1$ ) and ( ¬$H_1$ or $P_2$ or $H_2$) and ..... ( ¬$H_m$ or $P_{m+1}$ or $H_{m+1}$ ) and ..... ( ¬$H_{n-1}$ or Pn or Hn) 3SAT is for 3 and satisfiable.

P with no index is the class of computations that can be computed in polynomial functional steps of a single stepping length of the argument of the computation. This is for any computation as Turing Machines, Register Machines and others with equivalence in power.

Step s so t(s) = $c_0 + c_1 s + C2 s^2 + C3 s^3 ... c_l s^l$

NP is the class of computations that check in polynomial time if a certificate is a solution. Exponential time is ruled out for P and NP ( $b^s$ ).

DNA is short for desoxyribonucleic acid, the genetic information. The important 4 bases are Adenine, Guanine, Cytosine and Thymine.

Conjecture P not equal NP if GCH end conjecture

Proof: 3SAT

With DNA with the 4 different Adenine, Guanine, Cytosine and Thymine.

antichain □

The proof shows that for a cell/monad computing DNA there must be a certain n ∈ $\mathbb{N}$ (of 3SAT) , n < 32000 to make sense, from where on information on infinities is crucial what is going on in heredity. This fact can not be denied or neglected in genetic research so that any kind of genetic engineering must know its limits. So P not equal NP is no more a problem of theoretical Informatics. The condition of the cell/monad is now crucial whether a computation can be carried out in time or not, in the not case the soon death after fertilization is the result. Artificial insemination has to be judged after a fair consideration, anal coitus conception as a result of speculation on partnership can not at all be seen as an alternative way although it happens in everyday life without science ( sperm out of cleaning chemistry with shit ).

To be precise: The proof shows that facts concerning the problem of infinities are crucial for the success of fertilization. Once this impact of soul or spirit is necessarily admitted it is likely the case that soul or spirit as well not appear when a certain double helix is to be worked out in computation and dividing cells. The moment when the DNA of the mother and father will build a single heredity information for the monad must also be considered as being naturally influenced by soul and spirit. The difference between soul and spirit is easily to be understood: The individuum in conception is the soul as being supported by a field the more the individuum lacks information.

Once a baby DNA is chosen the time problem starts as in the proof, this means that from birth to death in the time problem all is possible. This is a reality for natural fertilization and also artificial insemination. This is not an experience free situation but from the start a problem with worse or easier suffering. The information available from the soul is the summary of what this animal or human being did in former incarnations. To understand the spirit field is not as easy, from arising the question if such a case ever to be supported in the past to an optimization of coaching information all is possible. The aim is to create life so that a killing time problem is to be avoided and also must be considered as a kind of heavy suffering. This suffering supplies information to the soul in question but it is better to work out the information in an incarnation.

The situation after the baby DNA is given is the same in natural fertilization and artificial insemination and is the subject of the proof. So the difference in having this chosen DNA is one problem of ethics, in natural fertilization the soul decides a bit in having a little choice with parents DNA according to the field. In some cases of artificial insemination this is also possible. Otherwise the situation is like searching for a soul matching this exercise or lesson in life (this incarnation). It must be stressed that this is also possible and a fact almost in natural fertilization because the mother and father DNA allow not all possibilities to be the start for computation.

According to the proof and what was said before the new baby to be born can not be constructed, programmed or not even be designed in genetic engineering. If there is a problem in time this can hardly be seen before in many cases. If the attempt is terminating in a time lack death before the birth, the reason can be that there is no possibility to compute this with this certain cellular environment, i.e. the soul in question can not carry out the information of the field in adapting, adjusting or tuning to what should be in time. This means on the other hand that failure attempts are not likely to be avoided in all cases, the knowledge of these possibilities and the knowledge of what flora in the mother's body is best for prosperity is very crucial. So any attempt to be seen as a failure in "designing" a genetic best individual is totally nonsense: The soul info of the new to bear baby, the matching of the field in question to the attempt and the quality of the biochemistry in matter relative or absolute are important. The last subject is very important: No one claims that any human being dies after being hurt by a bee, but also almost everyone admits it could be, for example after an allergic shock. All this in relative possibility must not necessarily lead to a confusion in research of fertilization. An allergic disorder in the start of cellular evolution most no more lead to theoretical confusion, the human being to be born has a history in experience in former incarnations that leads to a system of better or worse conditions to be relative to the individuum in question. At this two paths possibility: is or was the problem relative or absolute!

In terms of philosophy there should only be relative problems, the last solution is that the individuum in question either dies fast or is born successfully while supplying a perfect help field. For all practical purposes this is hardly to be observed but a principle of Philosophy of Religion. The scientific argument is that the to be born person has an attitude towards infinity that stresses GCH against Forcing outside in. Then a certificate is supplied and this NP is faster than P. On the other hand always acting in adoring material factual constraints leads to a situation which can be compared to Forcing in Set Theory. This is not a Philosophy of success, to do something for others is the start to supply the field without which there is nothing. It is also not a Philosophy of health, illness in a relative way is a not to ignore part.

For research it needs to be stressed that the scientists give up the view an individuum could be designed in genetic engineering and a failure is the reason for the soon death after fertilization. An human being or animal might fail on its own lack of information in one mother body and prosper in material health in another mother body. Furthermore the same cellular and DNA environment is a reason for best health incarnation of one soul, for another one it is a hard life or soon death coming up. This knowledge is crucial in research because any failure in attempt is not because of a kind of bad or not possible DNA. Therefore the proof with its considerations is helpful for any kind of research and the claim is based on this fact. It is very important that the scientists can give up searching for "ghosts" because of this and this is a lasting situation.

In all the relative problems the best case is if local infinity supplies a certificate to be the fastest solution possible in NP. The reason is local infinity because of a solution of the soul or also of the field in overruling to support. If no certificate is around a certain parts of the computation must be worked out in P. In the ethical worst case of course all is a kind of manipulation in Forcing in P. This is not a kind of creating new contra science subjects, it is well known that ethics is something difficult. The consideration is not for creating superstition but relies on the fact that Claus Schenk Graf von Stauffenberg did something different than the murderer of a whore in sadism. This is a dangerous subject but nevertheless necessary. So in everyday life P is the area for working it out in crime or in effort while this is subconscious a subject for the baby in pregnancy. And only here the subject can be a present in having a certificate as an oracle out of infinity, in the result independent whether worked out on own effort or a present from the field. The arising question why a present from the field is easy, every talented and fair teacher practises this in education as well as parents and people holding courses for adults. All those people react in aiming the result and this is something almost anyone knows that not to many pupils are better for this interaction. Once this practised and repeated is the start for supplying a field, if the motivation for the job is fairness and charity as well. All that is done by anyone is then a kind of building up relations on infinities, if violence in a worst case and if charity best. It is part of the proof to state this dependency, in everyday life it is not easy to measure infinities of course, we live in a world where particles are taught despite quantum fields. But once the relation infinity to heredity is stressed it is best to be aware what this means.

The DNA is a message likely to be seen as relative to the cellular environment message. It depends on the question is the right certificate around in the moral best case. Of course not only one. In all other cases if not GCH is local valid the question is whether the Genotype to Phenotype computation takes not to long time in P. So to be precise: If a certificate is supplied out of infinity as an oracle there will be many steps of computation without proof of a result, but an hour, a day, a week or a month later it will be clear it was a best solution. The computations in P are if nothing is here to rely in hope on and are the parts in growing up where illness is likely to be faced as an adult. Of course if there are heavier problems the soon death before birth is a natural possibility, but with information in suffering in the long run. It is necessary to see that the three areas DNA, cellular environment and soul information or field are absolute values but with relative issues all the way. Smoking during pregnancy, Xray examination, radio-nuclei contamination in the food after nuclear power plant accidents are of course not to be seen relative. On the other hand any cellular environment is in a relative relation to the new DNA, a fact to be stressed more in detail.

It must be stressed that in most cases many computations run simultaneously or are supported by a certificate:

$$t(s_1, s_2, s_3,.....s_n) = c_{10} + c_{11}\,s_1 + c_{12}\,s_1^2 + c_{13}\,s_1^3 \ldots c_{1l}\,s_1^l + c_{20} + c_{21}\,s_2 + c_{22}\,s_2^2 + c_{23}\,s_2^3 \ldots c_{2m}\,s_2^m + \ldots\ldots$$

$$\ldots\ldots + c_{n0} + c_{n1}\,s_n + c_{n2}\,s_n^2 + c_{n3}\,s_n^3 \ldots c_{nk}\,s_n^k$$

The computations can even depend on each other and therefore even have mixed terms like:
$c_{i3/k5} \cdot s_i^3 \cdot s_k^5$ or $c_{i3/k5/m4} \cdot s_i^3 \cdot s_k^5 \cdot s_m^4$

These can't be written in a scheme so it is stressed in two examples. The resulting equation is a diophantic equation and is a structure equal to a self referent proposition according to Kurt Gödel and Leon Henkin due to the proof of Yuri Matiasevic: According to this proof it can not be proofed whether a certain equation of this kind has a solution.

Such an equation can on the other hand be seen equal to a proposition first used by Kurt Gödel in his incompleteness theorem for number theory(Arithmetic) and it is presumed here that this holds for other equations also with respect to a proposition first considered by Leon Henkin.

A self referent proposition here is a proposition telling something about itself or its proper negation. In modal logics L is the sign for necessary and M is the sign for possible so that LMp means it is necessary that it is possible that p. The certain calculus of modal logic to be valid is to be considered as a non normal calculus where in the semantics there are worlds related to the contradiction ( M(p and ¬p) is true ). A certain symmetry breaks are possible, it is presumed that $E3$, $E3^0{+}D$, $E3^0$, $E2$, $E2^0{+}D$, $E2°$ are among the calculi in question for finite logics.

So we write the propositions in question as modalities of self reference of the first kind (Liar paradox).

| | | | |
|---|---|---|---|
| The Liar Paradox is : | A: A is false | | |
| | ¬∃x∃y (PP(x,y) and SR(y,z) ) | ...... | Gödel number g |
| G: | ¬∃x∃y (PP(x,y) and SR(y,g) ) | | |
| ¬G | 3x3y ( PP(x,y) and SR(y,g) ) | | |
| | 3x3y ( PP(x,y) and SR(y,z) ) | ...... | Gödel number h |
| H: | 3x3y ( PP(x,y) and SR(y,h) ) | | |
| ¬H: | ¬∃x∃y ( PP(x,y) and SR(y,h) ) | | |

$PP(x,y)$     is for x is a proof of y (proof pair)

$SR(y,z)$     is for y is a formula resulting where the only free variable in z is replaced by its Gödel number (self replacement)

$\#z$     denotes the Gödel number of z

$\#^{-1}(z)$     denotes the formula of Gödel number z

Set Theory can be axiomatized as ZFC (Zermelo Fränkel with axiom of choice) or NBG (von Neumann Bernays Gödel).

Then in a recursion modalities of self reference can be defined on a natural number or an ordinal number as a function defined on n or $\alpha$ where each f(i) or f($\beta$) is an axiomatic system stronger than the system before or stronger then the limit $\delta$ in case of $\delta{+}1$ as follows. The ordinal case is suggested for the quantum field, the natural number case for DNA. The modality is assumed to be written in normal form with only one or no negation sign leftmost. The $FAS_0$ is Set Theory and having a system $FAS_m$ the system $FAS_{m+1}$ is defined as

| | | | |
|---|---|---|---|
| Lξ | if | m=0 | and next $FAS_1$ is built by adding $\neg G_{Set}$ as an axiom |
| Mξ | if | m=0 | and next $FAS_1$ is built by adding $G_{Set}$ as an axiom |
| LSξ | if | m>0 | and next $FAS_{m+1}$ is built by adding $\neg G_{FASm}$ as an axiom |
| MSξ | if | m>0 | and next $FAS_{m+1}$ is built by adding $G_{FASm}$ as an axiom |

Sξ is short for modality so far.

The ordinal case is similar in an infinitary language with the remark that for a limit ordinal $\lambda$ we have a formal axiomatic system $FAS_\lambda$ but not a self referent proposition.

This is in case for building up the implicit attitude. The leftmost sign is the explicit attitude:

| | | | |
|---|---|---|---|
| LSξ | if | m=n-2 | and next $FAS_{m+1} = FAS_{n-1}$ is built by adding $\neg G_{FASm}$ as an axiom |
| MSξ | if | m=n-2 | and next $FAS_{m+1} = FAS_{n-1}$ is built by adding $H_{FASm}$ as an axiom |

*(continued)*

| | | | |
|---|---|---|---|
| ¬LSξ | if | m=n-2 | and next $FAS_{m+i}$= $FAS_{n--1}$ is built by adding $G_{FASm}$ as an axiom |
| ¬MSξ | if | m=n-2 | and next $FAS_{m+1}$= $FAS_{n--1}$ is built by adding $\neg H_{FASm}$ as an axiom |

So on n we have n-1 modalities to define, n-1 is the explicit modality.

On $\alpha$ we can define this for a successor $\alpha = \beta +2$.

The interpretation is that a modality built up by ¬G tells something about an infinitely long proof. The cardinality of this proof is crucial for what is going on with a certificate.

Modalities of self reference can also be built up according to the Berry Paradox that is

| | | |
|---|---|---|
| n bits : | The least number m that can not be described in n bits | |
| 3xyz | $( [\neg \exists u\, PP_{FASu\#}{}^{-1}{}_{(z)}(u,y)]$ and $[3v\, PP_{FASu\#}{}^{-1}{}_{(z)u\#}{}^{-1}{}_{(x)}(v,y)]$ and $SR(z,w)\,)$ | Gödel number a |
| A: 3xyz | $( [\neg 3u\, PP_{FASu\#}{}^{-1}{}_{(z)}(u,y)]$ and $[3v\, PP_{FASu\#}{}^{-1}{}_{(z)u\#}{}^{-1}{}_{(x)}(v,y)]$ and $SR(z,a)\,)$ | |
| ¬A: ¬∃xyz | $( [\neg 3u\, PP_{FASu\#}{}^{-1}{}_{(z)}(u,y)]$ and $[3v\, PP_{FASu\#}{}^{-1}{}_{(z)u\#}{}^{-1}{}_{(x)}(v,y)]$ and $SR(z,a)\,)$ | |
| ¬∃xyz | $( [\neg 3u\, PP_{FASu\#}{}^{-1}{}_{(z)}(u,y)]$ and $[3v\, PP_{FASu\#}{}^{-1}{}_{(z)u\#}{}^{-1}{}_{(x)}(v,y)]$ and $SR(z,w))$ | Gödel number b |
| B: ¬∃xyz | $( [\neg 3u\, PP_{FASu\#}{}^{-1}{}_{(z)}(u,y)]$ and $[3v\, PP_{FASu\#}{}^{-1}{}_{(z)u\#}{}^{-1}{}_{(x)}(v,y)]$ and $SR(z,b)\,)$ | |
| ¬B 3xyz | $( [\neg 3u\, PP_{FASu\#}{}^{-1}{}_{(z)}(u,y)]$ and $[3v\, PP_{FASu\#}{}^{-1}{}_{(z)u\#}{}^{-1}{}_{(x)}(v,y)]$ and $SR(z,b)\,)$ | |

A tells us something about its consistency so it is contradictive according to incompleteness consistency.

To be so impudent to claim the own negation to be consistent as ¬B does this is best.

| | | | |
|---|---|---|---|
| Lγ | if | m=0 | and next $FAS_1$ is built by adding $\neg B_{Set}$ as an axiom |
| Mλ | if | m=0 | and next $FAS_1$ is built by adding $B_{Set}$ as an axiom |
| LSγ | if | m>0 | and next $FAS_{m+1}$ is built by adding $\neg B_{FASm}$ as an axiom |
| MSγ | if | m>0 | and next $FAS_{m+1}$ is built by adding $B_{FASm}$ as an axiom |

Sγ is short for modality so far.

This is in case for building up the implicit attitude. The leftmost sign is the explicit attitude:

| | | | |
|---|---|---|---|
| LSγ | if | m=n-2 | and next $FAS_{m+1} = FAS_{n--1}$ is built by adding $\neg B_{FASm}$ as an axiom |
| MSγ | if | m=n-2 | and next $FAS_{m+1} = FAS_{n--1}$ is built by adding $\neg A_{FASm}$ as an axiom |
| ¬LSγ | if | m=n-2 | and next $FAS_{m+1}= FAS_{n--1}$ is built by adding $B_{FASm}$ as an axiom |
| ¬MSγ | if | m=n-2 | and next $FAS_{m+1}= FAS_{n--1}$ is built by adding $A_{FASm}$ as an axiom |

So on n we have n-1 modalities to define, n-1 is the explicit modality.

On $\alpha$ we can define this for a successor $\alpha = \beta +2$.

G.J.Chaitin used a diophantic equation to work on Berry Paradox in allowing exponents as a variable. This is exponential time if the exponent can not be restricted to a certain limit, so this is crucial.

There is a third kind of modalities of self reference:

| | | | |
|---|---|---|---|
| 3yz | $( [\neg 3u\, PP_{FAS}(u,y)]$ and $[3v\, PP_{FASu\#}{}^{-1}{}_{(z)}(v,y)]$ and $SR(z,w)\,)$ | Gödel number t |
| T: 3yz | $( [\neg 3u\, PPFAS(u,y)]$ and $[3v\, PP_{FASu\#}{}^{-1}{}_{(z)}(v,y)]$ and $SR(z,t)\,)$ | |
| ¬T: ¬∃yz | $( [\neg 3u\, PPFAS(u,y)]$ and $[3v\, PP_{FASu\#}{}^{-1}{}_{(z)}(v,y)]$ and $SR(z,t)\,)$ | |
| ¬∃yz | $( [\neg 3u\, PP_{FAS}(u,y)]$ and $[3v\, PP_{FASu\#}{}^{-1}{}_{(z)}(v,y)]$ and $SR(z,w)\,)$ | Gödel number r |
| R: ¬∃yz | $( [\neg\exists u\, PPFAS(u,y)]$ and $[3v\, PP_{FASu\#}{}^{-1}{}_{(z)}(v,y)]$ and $SR(z,r)\,)$ | |
| ¬R 3yz | $( [\neg 3u\, PP_{FAS}(u,y)]$ and $[3v\, PP_{FASu\#}{}^{-1}{}_{(z)}(v,y)]$ and $SR(z,r)\,)$ | |

| | | | |
|---|---|---|---|
| Lη | if | m=0 | and next $FAS_1$ is built by adding $\neg R_{Set}$ as an axiom |
| Mη | if | m=0 | and next $FAS_1$ is built by adding $R_{Set}$ as an axiom |
| LSη | if | m>0 | and next $FAS_{m+1}$ is built by adding $\neg R_{FASm}$ as an axiom |
| MSη | if | m>0 | and next $FAS_{m+1}$ is built by adding $R_{FASm}$ as an axiom |

S$\eta$ is short for modality so far.

This is in case for building up the implicit attitude. The leftmost sign is the explicit attitude:

$$LS\eta \quad if \quad m=n-2 \quad and\ next\ FAS_{m+1} = FAS_{n-1}\ is\ built\ by\ adding\ \neg R_{FASm}\ as\ an\ axiom$$
$$MS\eta \quad if \quad m=n-2 \quad and\ next\ FAS_{m+1} = FAS_{n-1}\ is\ built\ by\ adding\ \neg T_{FASm}\ as\ an\ axiom$$
$$\neg LS\eta \quad if \quad m=n-2 \quad and\ next\ FAS_{m+1} = FAS_{n-1}\ is\ built\ by\ adding\ R_{FASm}\ as\ an\ axiom$$
$$\neg MS\eta \quad if \quad m=n-2 \quad and\ next\ FAS_{m+1} = FAS_{n-1}\ is\ built\ by\ adding\ T_{FASm}\ as\ an\ axiom$$

So on n we have n-1 modalities to define, n-1 is the explicit modality.

On $\alpha$ we can define this for a successor $\alpha = \beta + 2$.

In the following iff is short for : if and only if

For a justification of these three kinds building modalities of self reference we look at six harmless properties and rely on the fixed point theorem (of course the negations can also then be considered):

Liar:

$$\xi(\gamma) \quad := \neg\exists x\ PP(x,y) \quad \lambda\ iff\ \xi(\#\lambda) \quad \sim\lambda$$
$$\varepsilon(\gamma) \quad := 3x\ PP(x,y) \quad \kappa\ iff\ \varepsilon(\#\kappa) \quad \neg\kappa$$

Berry:

$$\chi(z) \quad := \exists xy \quad ([\neg\ 3u\ PP_{FASu\#}{}^{-1}{}_{(z)}(u,y)]\ and\ [3v\ PP_{FASu\#}{}^{-1}{}_{(z)u\#}{}^{-1}{}_{(x)}(v,y)])\quad \theta\ iff\ \chi(\#\theta) \quad \neg\theta$$
$$V(z) \quad := \neg\exists xy \quad ([\neg\ 3u\ PP_{FASu\#}{}^{-1}{}_{(z)}(u,y)]\ and\ [3v\ PP_{FASu\#}{}^{-1}{}_{(z)u\#}{}^{-1}{}_{(x)}(v,y)])\quad \psi\ iff\ \gamma(\#\psi) \quad \neg\psi$$

Third kind:

$$p(z) \quad := \exists\gamma \quad ([\neg\ 3u\ PP_{FAS}(u,y)]\ and\ [3v\ PP_{FASu\#}{}^{-1}{}_{(z)}(v,y)])\quad \sigma\ iff\ \rho(\#\sigma) \quad \neg\sigma$$
$$v(z) \quad := \neg\exists\gamma \quad ([-\ 3u\ PPFAS(u,y)]\ and\ [3v\ PP_{FASu\#}{}^{-1}{}_{(z)}(v,y)])\quad \delta\ iff\ v(\#\delta) \quad \neg\delta$$

The Liar paradox is a kind of summary attitude of the soul in the certain matter, the Berry paradox builds up new coordinates of life and the third kind of paradox is necessary to give up former worse habits.

The discussion was ended in presenting modalities of self reference of three kinds and this at the view on cellular environment and its relation to DNA.

The here presented modalities are in a close relation to a theory of space and time. For this reason a slight change of the geometric properties of the monad or cell has enormous consequences on the time problem. So the same computation can be successful in one cellular environment and fail for another, and a certificate as a future prediction or future guarantee can also be best in one case and fail for another. On the other hand the change of quality is important in an enormous way. There are even examples known depending on the blood group if a mother bears two daughters, there is danger for the second baby (hemolytic disease of the newborn). Whenever such a situation occurs in science where there is really a well known disease it is very important to conclude that there are possible relative problems that can not be subsumed in a logical always if correlation.

The opinion or view that we have an input in genetics and can then check if a cellular mechanical procedure is successful according to the input must be abandoned totally. The geometric difference in phenotype has its pendant in the geometry of the cells. Furthermore any difference in quality of adults as taste, health, intelligence or fitness has its reason in the recursive evolution of the body in pregnancy according to soul or field possibility shining through the cell-DNA relation. There are people with a favourite taste for meat or caffeine and for some of them this is danger and risk for sooner death. Statistics on these subjects are contradictive and don't cover any kind of quality. Furthermore the impact of the soul and the field has been ignored totally so far and it is not even likely to be grasped by science in a materialistic sense. The totally chaotic situation in quality can never be caught by rules in designing an animal or human being. A trivial scientific rule is to avoid conception while being drunk and this as anal coitus conception. But it might be possible to find other statistical correlations in the interaction DNA to cell / monad concerning quality. This is even possible in research without moral danger because the male sperm can be analysed without any danger and also the female counterpart after menstruation. The cell need not even be analysed without destruction if the difference in geometry is a matter of research (Xray).

It can not be stressed enough that the monad or cell must not be seen as an objective computer working out DNA-info, but is a part of the evolution governed by the attitudes towards infinity and the info in infinity.

The quoting for the several stressed scientific papers will be in addition a part of the claim(s).

## Claims

The following claim points out the help of aspects of Mathematics for genetic Biology, help that is crucial for the understanding of genetic Biology. The subject is obviously important for any Biology that deals with the origin of life in a cell up to human conception.

This claim, the survey and the description are both for publication and patent.

In the following GCH is for General Continuum Hypothesis in Set Theory, that states that any step of infinity measured in Aleph $\aleph_\lambda$ is the same as the power set Bet $\beth_\lambda$ of the Aleph before. For limit cardinals the unification must have the same result. So the naturals $\mathbb{N}$ are $\omega$, the least inductive set (infinity) as $\aleph_0$. $2^\omega$ is Beth1 ($\beth_1$). According to the famous proof of Cohen it is possible and consistent in Set Theory that Aleph1 $\aleph_1$ lies inbetween: $\omega < \aleph_1 < \beth_1$. But GCH as a sumption is to rule out this possibility in an axiom in addition.

Let 3SAT be a formula of the following kind: Pi ... Pn propositions, $H_1$ ... Hn helper propositions ( $\neg H_n$ or Pi or $H_1$ ) and ( $\neg H_1$ or $P_2$ or $H_2$ ) and ..... ( $\neg H_m$ or $P_{m+1}$ or $H_{m+1}$ ) and ..... ( $\neg H_{n-1}$ or Pn or Hn) 3SAT is for 3 and satisfiable.

.P with no index is the class of computations that can be computed in polynomial functional steps of a single stepping length of the argument of the computation. This is for any computation as Turing Machines, Register Machines and others with equivalence in power.

Step s so $t(s) = c_0 + c_1 s + C2 s^2 + C3 s^3 ... c_l s^l$

NP is the class of computations that check in polynomial time if a certificate is a solution. Exponential time is ruled out for P and NP ( $b^s$).

DNA is short for desoxyribonucleic acid, the genetic information. The important 4 bases are Adenine, Guanine, Cytosine and Thymine.

Conjecture P not equal NP if GCH end conjecture Proof: 3SAT

With DNA with the 4 different Adenine, Guanine, Cytosine and Thymine.

antichain □

The proof shows that for a cell/monad computing DNA there must be a certain $n \in \mathbb{N}$ (of 3SAT) , n < 32000 to make sense, from where on information on infinities is crucial what is going on in heredity. This fact can not be denied or neglected in genetic research so that any kind of genetic engineering must know its limits. So P not equal NP is no more a problem of theoretical Informatics. The condition of the cell/monad is now crucial whether a computation can be carried out in time or not, in the not case the soon death after fertilization is the result. Artificial insemination has to be judged after a fair consideration, anal coitus conception as a result of speculation on partnership can not at all be seen as an alternative way although it happens in everyday life without science ( sperm out of cleaning chemistry with shit ).

The claim is that for all kinds of fertilization the knowledge of both the description and the survey is crucial, it is important for Biology that there is a huge impact of soul on what is going on with the embryo or foetus. The fact that an animal or human being can never be designed in determining a DNA is of extreme importance for genetic Biology. The least we can tell is there is not even a bit knowledge on how much support there is in the field for the foetus or embryo in question, so to say how much probability for the survival we can presume in a time problem.

But this is not all: A certain DNA might be best for the baby if one mother is pregnant for it, another mother with the same baby-DNA might lose the baby, the certain problem of the field not even considered. If both facts are in our attention we are lost totally. It is not stated here that the DNA is not important, but the relation to a several facts is important: From the start the flora in the mothers body relative to DNA and absolute, the certain soul in expecting material life on its own is not even a bit a constant, in some cases the attitude is to rely on certificates while in other cases any computation is tried in a kind of manipulation of state of affairs as got used to in former lives as a bad habit. The support of other people in a field combined with the properties of the foetus or embryo in soul gives us a not even a bit reasonable situation, anyone must face this fact.

The state of affairs in analysing the possibilities in modalities of self reference is a very difficult left open problem, in the DNA-finite case with a maybe finite solution to understand it in parts and in the infinite field case not to top in difficulty. But what we can say is that the naïve approach is no more possible as a result of the description! No one can presume to have health because of a few parts of the DNA-double-helix and blond hair because of other parts. There can be many computations or certificates simultaneously with an overlap in the parts of the double-helix. All people who deal with genetic Biology are warned to have a to naïve view and this is a help that cannot be denied. To be lost in problems that cannot be solved is the state of affairs now, and any step to knowledge as given in modalities of self reference and the proof is claimed in the area of genetic Biology as a help.

The claim is first consisting of any kind of being alarmed of unsolvable problems according to the theory pointed out and second any applications based on the pointed out theory, so any use of the proof and the theory of modalities of self reference in current and later genetic Biology.

Yuri Matiyasevich

• Yuri Matiyasevich *Hilbert's 10th Problem,* Foreword by Martin Davis and Hilary Putnam, The MIT Press, 1993. ISBN 0-262-13295-8.

Kurt Gödel

• 1931, "Über formal unentscheidbare Sätze der *Principia Mathematica* und verwandter Systeme, I." *Monatshefte für Mathematik und Physik* **38**: 173-98.
• Kurt Gödel, 1992. *On Formally Undecidable Propositions Of Principia Mathematica And Related Systems,* tr. B. Meltzer, with a comprehensive introduction by Richard Braithwaite. Dover reprint of the 1962 Basic Books edition.
• Kurt Gödel, 2000.[47] *On Formally Undecidable Propositions Of Principia Mathematica And Related Systems,* tr. Martin Hirzel

Gregory J Chaitin

The Berry paradox (Complexity, 1995)

• *Information, Randomness & Incompleteness* (World Scientific 1987) (online)
• *Algorithmic Information Theory* (Cambridge University Press 1987) online
• *Information-theoretic Incompleteness* (World Scientific 1992) (online)
• *The Limits of Mathematics* (Springer-Verlag 1998)
• *The Unknowable* (Springer-Verlag 1999)
• *Exploring Randomness* (Springer-Verlag 2001)
• *Conversations with a Mathematician* (Sprinaer-Verlaa 2002)
• *From Philosophy to Program Size* (Tallinn Cybernetics Institute 2003)
• *Meta Math!: The Quest for Omega* (Pantheon Books 2005) (reprinted in UK as *Meta Maths: The Quest for Omega,* Atlantic Books 2006) (arXiv:math/0404335)
• *Teoria algoritmica della complessità* (G. Giappichelli Editore 2006)
• *Thinking about Gödel & Turing* (World Scientific 2007)
• *Mathematics, Complexity and Philosophy* (Editorial Midas 2011)
• *Gödel's Way* (CRC Press 2012)
• *Proving Darwin: Making Biology Mathematical* (Pantheon Books 2012)

**References[edit]**

1. ^ Gregory Chaitin (2007), Algorithmic information theory: "Chaitin Research Timeline" Archived 23 March 2012 at the Wayback Machine

2. ^ Review of Meta Math!: The Quest for Omega, By Gregory Chaitin SIAM News, Volume 39, Number 1, January/February 2006

3. ^ *Calude, C.S. (2002). Information and Randomness: An Algorithmic Perspective. Texts in Theoretical Computer Science. An EATCS Series. Springer-Verlag.*

4. ^ R. Downey, and D. Hirschfeldt (2010), *Algorithmic Randomness and Complexity,* Springer-Verlag.

5. ^ *Li; Vitanyi (1997), An Introduction to Kolmogorov Complexity and Its Applications. Springer, p. 92, ISBN 9780387948683, G.J.Chaitin had finished the Bronx High School of Science, and was an 18-year-old undergraduate student at City College of the City University of New York, when he submitted two papers.... In his [second] paper, Chaitin puts forward the notion of Kolmogorov complexity....*

6. ^ *Chaitin, G. J. (October 1966), "On the Length of Programs for Computing Finite Binary Sequences", Journal of the ACM, **13** (4): 547-569, doi:10.1145/321356.321363, S2CID 207698337*

7. ^ G.J. Chaitin, *Register Allocation and Spilling via Graph Coloring,* US Patent 4,571,678 (1986) [cited from *Register Allocation on the Intel®Itanium® Architecture,* p.155]

8. ^ *Chaitin, G. J. (2003). "From Philosophy to Program Size". arXiv:math/0303352.*

9. ^ Zenil, Hector "Leibniz medallion comes to life after 300 years" *Anima Ex Machina.* The Blog of Hector Zenil, 3 November 2007.

10. ^ Panu Raatikainen, "Exploring Randomness and The Unknowable" *Notices* of the American Mathematical Society Book Review October 2001.

11. ^ *Franzén, Torkel (2005), Gödel's Theorem: An Incomplete Guide to its Use and Abuse, Wellesley, Massachusetts: A K Peters. Ltd., ISBN 978-1-56881-238-0*

Further reading<sub>[edit]</sub>

• *Pagallo, Ugo (2005), Introduzione alla filosofia digitale. Da Leibniz a Chaitin [Introduction to Digital Philosophy: From Leibniz to Chaitin] (in Italian), G. Giappichelli Editore, ISBN 978-88-348-5635-2, archived from the original on 22 July 2011, retrieved 16 April 2008*

• *Calude, Cristian S., ed. (2007), Randomness and Complexity. From Leibniz to Chaitin, World Scientific, ISBN 978-981-277-082-0*

• *Wuppuluri, Shyam; Doria, Francisco A., eds. (2020), Unravelling Complexity: The Life and Work of Gregory Chaitin, World Scientific, doi:10.1142/11270, ISBN 978-981-12-0006-9, S2CID 198790362* { {citation} } : External link in | ref= (help)

Leon Henkin

• Löb's theorem (category Theorems in the foundations **of** mathematics)

Press. ISBN 978-0-521-48325-4. Löb, Martin (1955), **"Solution of a Problem of Leon Henkin",** Journal **of** Symbolic Logic, 20 (2): 115-118, doi:10.2307/2266895

**DECLARATION**

which under Rule 63 of the European Patent Convention shall be considered, for the purposes of subsequent proceedings, as the European search report

**Application Number**

EP 22 02 0196

| The Search Division considers that the present application, does not comply with the provisions of the EPC to such an extent that it is not possible to carry out a meaningful search into the state of the art on the basis of all claims | CLASSIFICATION OF THE APPLICATION (IPC) |
|---|---|
| Reason: | INV.<br>G06N3/123 |

1       Summary
1.1         European patent application No.22020196 fails to such an extent to comply with this Convention that it is impossible to carry out a meaningful search regarding the state of the art on the basis of all or some of the subject-matter claimed. The Applicant has been invited to file, within a period of two months, a statement indicating the subject-matter to be searched; however, said statement was not filed in due time: as such a reasoned declaration on carrying out a meaningful search is provided hereinafter.

2            Article 123(2) EPC
2.1         The amendments filed in electronic form on 21-06-2022 introduce subject-matter which extends beyond the content of the application as filed, contrary to Article 123(2) EPC. The amendments under concern are as follows.
2.1.1        The Applicant has added a claim passage in the subject-matter of claim(s), from page 2, line 44 to page 3, line 67, for which a clear and unambiguous basis in the application as originally filed cannot be found. As such, the set of claim(s) does not meet the requirements of Article 123(2) EPC.
2.1.2        To facilitate the assessment, the following considers the subject-matter of claim(s) without the above-mentioned passage.

3            Rule 63 EPC
3.1         The application fails to comply with the requirements of Article 84 EPC to
                              -/--

| Place of search | Date | Examiner |
|---|---|---|
| The Hague | 15 February 2023 | Tsakonas, Athanasios |

EPO FORM 1504 (P04F37)

page 1 of 3

Europäisches
Patentamt

European
Patent Office

Office européen
des brevets

**DECLARATION**

**Application Number**

which under Rule 63 of the European Patent Convention
shall be considered, for the purposes of subsequent
proceedings, as the European search report

EP 22 02 0196

| The Search Division considers that the present application, does not comply with the provisions of the EPC to such an extent that it is not possible to carry out a meaningful search into the state of the art on the basis of all claims | **CLASSIFICATION OF THE APPLICATION (IPC)** |
|---|---|
| Reason: | |

such an extent that it is impossible to carry out a meaningful search regarding the state of the art on the basis of any of the claims (Rule 63 EPC). The objections under Article 84 EPC leading to the impossibility of carrying out a meaningful search are indicated below:

3.1.1    It is not possible to determine the number, the category, and the dependency of any potential claims, as no numbering is included (Rule 43(2) and (4) EPC, Article 84 EPC). It appears that the subject-matter of the claim(s) merely constitutes a part of the description.

3.1.2    The subject-matter of the claim(s) does not include any "technical features of the invention" (Rule 43(1) EPC): it appears that the subject-matter of the claim(s) does not define a patentable invention within the meaning of Article 52(1) EPC. It is not possible to determine the subject-matter to be searched: the subject-matter of the claim(s) appear(s) to point to a mathematical proof on a biological process, in particular on 2.1.3    in vitro fertilization, however said subject-matter defines features that are unclear and ambiguous, such as, for example, the subject-matter in page 2, lines 37-40 of the claim(s) (Article 84 EPC).

3.1.4    Furthermore, the description does not disclose the invention, in such terms that the technical problem and its solution can be understood, and does not state any advantageous effects of the invention with reference to the background art; in particular, it is not possible,

-/--

| Place of search | Date | Examiner |
|---|---|---|
| The Hague | 15 February 2023 | Tsakonas, Athanasios |

EPO FORM 1504 (P04F37)

page 2 of 3

Europäisches
Patentamt

European
Patent Office

Office européen
des brevets

**DECLARATION**

**Application Number**

which under Rule 63 of the European Patent Convention
shall be considered, for the purposes of subsequent
proceedings, as the European search report

EP 22 02 0196

| The Search Division considers that the present application, does not comply with the provisions of the EPC to such an extent that it is not possible to carry out a meaningful search into the state of the art on the basis of all claims<br><br>Reason: | **CLASSIFICATION OF THE APPLICATION (IPC)** |
|---|---|
| for example, to determine the meanings of "impact of soul or spirit" as defined in description (page 2 line 43), or "former incarnations" (description, page 2, line 50), "the human being to be born has a history in experience in former incarnations" (description, page 3, line 74) or "the soon death before birth is a natural possibility" (description, page 4, line 116) (Rule 42(1)(c) EPC). As such, it appears that successful performance of the invention is inherently impossible because it would be contrary to well-established physical laws (Article 83 EPC).<br>3.1.5    In addition, the abstract contains statements on the alleged merits or value of the invention (i.e. line 1) (Rule 47(2) EPC).<br><br>4    Conclusion<br>4.1    The above objected non-compliance with the substantive provisions is such that a meaningful search of the whole, claimed subject-matter cannot be carried out (Rule 63 EPC and Guidelines B-VIII, 3).<br><br>The applicant's attention is drawn to the fact that a search may be carried out during examination following a declaration of no search under Rule 63 EPC, should the problems which led to the declaration being issued be overcome (see EPC Guideline C-IV, 7.2). | |

2

EPO FORM 1504 (P04F37)

| Place of search | Date | Examiner |
|---|---|---|
| **The Hague** | **15 February 2023** | **Tsakonas, Athanasios** |

page 3 of 3